# EUROPÄISCHE PATENTANMELDUNG

(11) **EP 4 220 927 A1**
(43) Veröffentlichungstag der Anmeldung: **02.08.2023**
(21) Anmeldenummer: 22154132.9
(22) Anmeldetag: 31.01.2022
(51) Int. Cl.: H02M 5/293, H02M 7/483, H02M 5/12, H02M 5/297, H02M 7/217

(54) **VORRICHTUNG UND VERFAHREN ZUM VERSORGEN EINER GLEICHSTROMLAST**

(71) Anmelder: Siemens Energy Global GmbH & Co. KG, 81739 München (DE)
(72) Erfinder: Lange, Julian, 93059 Regensburg (DE); Neubert, Rolf, 90763 Fürth (Bay.) (DE); Schmitt, Daniel, 92353 Postbauer-Heng (DE); Vielberth, Thomas, 90425 Nürnberg (DE)

(57) **Zusammenfassung**

Die Erfindung betrifft eine Vorrichtung (10) zum Versorgen einer Gleichstromlast (11) mit einer Transformatoranordnung (12) und einem Umrichter (16). Die Erfindung zeichnet sich dadurch aus, dass die Transformatoranordnung netzseitig mittels des Umrichters mit einem Versorgungsnetz und lastseitig mit der zu versorgenden Gleichstromlast verbunden und mittels einer Regelung des Umrichters lastseitig ein Gleichstrom erzeugt wird. Die Erfindung betrifft ferner ein Verfahren zum Versorgen einer Gleichstromlast mittels der erfindungsgemäßen Vorrichtung.

## Beschreibung

Die Erfindung betrifft eine Vorrichtung zum Versorgen einer Gleichstromlast mit einer Transformatoranordnung und einem Umrichter.

Eine Gleichstromlast ist in diesem Sinne eine Last, die mittels eines Gleichstromes elektrisch versorgt wird. Eine Gleichstromlast kann beispielsweise ein PEM-Elektrolyseur (Proton Exchange Membrane-Elektrolyseur) oder auch ein Elektrolichtbogenofen sein. Bei der Versorgung solcher Gleichstromlasten ist meist ein möglichst hoher eingangsseitiger Gleichstrom vorteilhaft.

Insbesondere für die Wasserelektrolyse mittels eines PEM-Elektrolyseurs muss der elektrische Strom vom Netzanschluss gleichgerichtet und geregelt werden, damit im Elektrolyseur der gewünschte elektrochemische Vorgang vonstattengehen und die umzusetzende Leistung an die Netzanforderungen angepasst werden kann. Der generell stetig steigende Bedarf an Wasserstoff verlangt künftig eine besonders hohe Wasserstofferzeugung, also auch besonders hohe Versorgungsströme. Eine Herausforderung besteht hierbei u.a. darin, einen sehr hohen Versorgungsstrom bei sehr niedriger Spannung am Elektrolyseur zur Verfügung zu stellen. Im Allgemeinen bestehen Versorgungsvorrichtungen für Elektrolyseanlagen aus einem Transformator und einem steuerbaren leistungselektronischen Umrichter. Dieser wird benötigt, um den Netzstrom gleichzurichten und die Regelbarkeit der umzusetzenden Leistung sicherzustellen. Bisher wird die steuerbare Leistungselektronik auf der Sekundärseite des Transformators installiert. Durch die hohen Ströme entstehen auf der Sekundärseite sehr hohe Verluste in den Halbleitern (P~I^2). Ferner ist die Regeldynamik des Umrichters eingeschränkt.

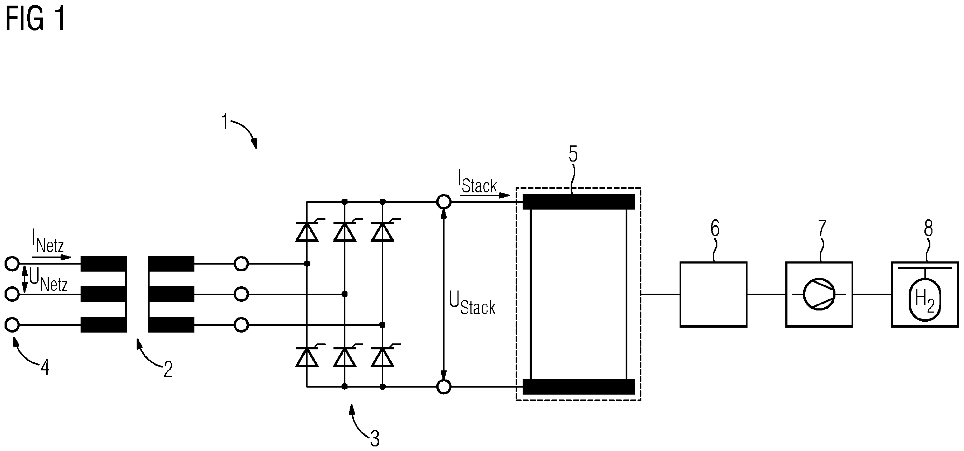

Eine bekannte Vorrichtung der eingangs genannten Art ist in Figur 1 dargestellt. Die Vorrichtung 1 umfasst einen Transformator 2 und einen Umrichter bzw. Gleichrichter 3. Im in Figur 1 gezeigten Beispiel ist der Umrichter eine Thyristorbrücke. Der Transformator 2 ist netzseitig direkt mit einem Versorgungsnetz 4 und lastseitig mittels des Umrichters 3 mit einer Gleichstromlast verbunden, im gezeigten Beispiel einer Elektrolyseanlage mit einem Elektrolyseur-Stack 5. Die Topologie der Leistungselektronik des Umrichters 3 ergibt sich aus den Anforderungen an die elektrischen Parameter und die Qualität der Gleichrichtung. Parametervorgaben sind insbesondere eine Stackspannung Ustack und ein Stackstrom Istack, die aus einer Netzspannung Unetz und einem Netzstrom Inetz erzeugt werden. Die Verwendung der Thyristorbrücke hat den Vorteil relativ niedriger Verluste und den Nachteil einer Restwelligkeit in der Ausgangsspannung (Stackspannung). Die Elektrolyseanlage umfasst üblicherweise einen Gastrockner 6, einen Gaskompressor 7 und/oder einen Druckspeicher 8, die dem PEM-Stack 5 nachgeschaltet sind.

Die Aufgabe der Erfindung ist es, eine artgemäße Vorrichtung anzugeben, die möglichst effizient und zuverlässig ist, insbesondere im Hinblick auf hohe Ausgangsströme.

Die Aufgabe wird bei der artgemäßen Vorrichtung erfindungsgemäß dadurch gelöst, dass die Transformatoranordnung netzseitig mittels des Umrichters mit einem (mehrphasigen) Versorgungsnetz, geeigneterweise mit zumindest drei Phasen, und lastseitig mit der zu versorgenden Gleichstromlast verbindbar ist, und der Umrichter, geeigneterweise mittels einer dazu eingerichteten Regelungseinrichtung, zum Erzeugen eines lastseitigen Gleichstromes eingerichtet ist. Entsprechend ist im Betrieb der Vorrichtung die Transformatoranordnung sekundärseitig (lastseitig) mit der Gleichstromlast und primärseitig mit dem Umrichter verbunden, der wiederum mit dem Versorgungsnetz verbunden ist. Im Unterschied zu den bekannten Vorrichtungen dieser Art ist bei der erfindungsgemäßen Vorrichtung der Umrichter auf der Primärseite (Netzseite) der Transformatoranordnung angeordnet. Mittels geeigneter Regelung kann der Umrichter derart betrieben werden, dass auf der Ausgangsseite der Vorrichtung (der Lastseite) ein Gleichstrom (Versorgungsstrom) erzeugt wird, um die Gleichstromlast zu versorgen.

Die erfindungsgemäße Vorrichtung hat den Vorteil, dass der Umrichter nicht auf die besonders hohen Ausgangsströme (lastseitigen Ströme), sondern auf die netzseitigen Ströme ausgelegt werden muss. Vorteilhaft ermöglicht eine geeignete Dimensionierung der Transformatoren, insbesondere deren Wicklungsverhältnis, und die Topologie des Umrichters eine weitgehende Skalierbarkeit der Vorrichtung. Ferner ermöglicht die anschlussseitige Flexibilität der vorgeschlagenen Topologie auch die Integration in ein DC-Netz, beispielsweise innerhalb eines Solarparks. Ist der Umrichter beispielsweise ein modularer Mehrstufenumrichter, der in jeder Phase eine Reihenschaltung von Schaltmodulen umfasst, die jeweils abschaltbare Halbleiterschalter und einen schaltmoduleigenen Energiespeicher umfassen, so ergeben sich weitere Vorteile. Durch die (regelungs-)dynamischen Eigenschaften des Mehrstufenumrichters kann der Sekundärstrom hochgenau und fast ohne Restwelligkeit geregelt werden. Zudem kann wegen kurzer Reaktionszeit im Bereich einiger weniger 10 Mikrosekunden ein sekundärseitiger Fehlerstrom nach Erkennung sicher abgeschaltet werden. Das erlaubt den Verzicht auf Hochstromabschalteinrichtungen auf der Sekundärseite (Lastseite).

Vorzugsweise umfasst der Umrichter einen ersten Umrichterzweig und einen zweiten Umrichterzweig, wobei die Transformatoranordnung einen ersten und einen zweiten Transformator umfasst, wobei der erste Transformator mittels des ersten Umrichterzweiges und der zweite Transformator mittels des zweiten Umrichterzweiges mit dem Versorgungsnetz verbindbar (bzw. im Betrieb verbunden) sind, und wobei lastseitige Wicklungen des ersten und des zweiten Transformators in Reihe oder parallel zueinander geschaltet sind. Eine ausgangsseitige Parallelschaltung der Wicklungen ermöglicht besonders hohe bzw. auch gegenübereinander phasenversetzte Ausgangsströme. In jedem der Umrichterzweige ist zweckmäßigerweise ein Umrichterventil mit steuerbaren Leistungshalbleitern angeordnet. In einer dreiphasigen Anwendung können drei Umrichterzweige in einer Deltaschaltung miteinander und mit dem Versorgungsnetz verbunden sein.

Gemäß einer Ausführungsform der Erfindung ist der erste Umrichterzweig zwischen einer ersten und einer zweiten Phase des Versorgungsnetzes schaltbar (bzw. erstreckt sich zwischen diesen Phasen im Betrieb der Vorrichtung) und umfasst einen ersten netzseitigen Umrichterarm und einen ersten transformatorseitigen Umrichterarm, wobei der erste Transformator zum ersten transformatorseitigen Umrichterarm parallelgeschaltet ist. Der zweite Umrichterzweig ist zwischen einer zweiten und einer dritten Phase des Versorgungsnetzes schaltbar (bzw. erstreckt sich zwischen diesen Phasen im Betrieb der Vorrichtung) und umfasst einen zweiten netzseitigen Umrichterarm und einen zweiten transformatorseitigen Umrichterarm, wobei der zweite Transformator zum zweiten transformatorseitigen Umrichterarm parallelgeschaltet ist. Die Umrichterzweige sind demnach jeweils in zwei Umrichterarme unterteilt, wobei der zugeordnete Transformator umrichterseitig (bzw. netz- oder primärseitig) parallel zu dem jeweiligen transformatorseitigen Umrichterarm geschaltet ist. Der jeweilige transformatorseitige Umrichterarm ist geeigneterweise zur Regelung des transformatorseitigen Stromes eingerichtet.

Zweckmäßigerweise umfassen die ersten und zweiten netzseitigen und transformatorseitigen Umrichterarme jeweils eine Reihenschaltung von Schaltmodulen, wobei jedes Schaltmodul (geeigneterweise abschaltbare) Leistungshalbleiterschalter, wie beispielsweise IGBT, IGCT oder dergleichen) und einen schaltmoduleigenen Energiespeicher (z.B. einen Kondensator) umfasst. Die Leistungshalbleiter und der Energiespeicher sind zweckmäßigerweise in einer Vollbrückenschaltung miteinander verbunden. Mit diesem Aufbau ist der Umrichter ein modularer Mehrstufenumrichter. Durch die modulare Umrichtertopologie, die im Allgemeinen eine freie Wahl der Anzahl der Schaltmodule in jedem Umrichterarm erlaubt, und die Wahl des Transformators ist vorteilhaft eine Skalierbarkeit auf verschiedene Spannungs- und Leistungsklassen möglich. Die Spannungen der einzelnen Energiespeicher werden vorzugsweise mittels eines geeigneten Balancing-Algorithmus balanciert (so dass die Energiespeicher gleichmäßig belastet werden).

Vorzugsweise sind mittels einer Regelungseinrichtung an dem ersten transformatorseitigen Umrichterarm eine erste Umrichterspannung und an dem ersten netzseitigen Umrichterarm eine zweite Umrichterspannung erzeugbar, wobei eine Summe der ersten und der zweiten Umrichterspannung einer Netzspannung des Versorgungsnetzes entspricht. Demnach kann mittels des jeweiligen transformatorseitigen Umrichterarmes zur Regelung des transformatorseitigen Stromes benötigte transformatorseitige Spannung gestellt werden, während mittels des jeweilig zugeordneten netzseitigen Umrichterarmes eine Ausgleichspannung gestellt bzw. erzeugt wird, so dass die transformatorseitige Spannung gegenüber der Netzspannung des Versorgungsnetzes kompensiert wird.

Gemäß einer Ausführungsform der Erfindung ist zur Vermeidung von Kreisströmen in der Vorrichtung lastseitig der Transformatoranordnung wenigstens ein Leistungshalbleiter mit einer Sperr- und einer Durchlassrichtung vorgesehen. Durch die Anordnung der Leistungshalbleiter auf der Ausgangsseite der Vorrichtung kann eine gegenseitige Beeinflussung der Transformatoren vermieden werden. Alternativ können die Leistungshalbleiter auch auf der Primärseite (Netzseite) der Vorrichtung angeordnet sein. Der wenigstens eine Leistungshalbleiter ist zweckmäßigerweise in Reihe zu der lastseitigen Wicklung des (jeweiligen) Transformators angeordnet.

Bevorzugt ist der wenigstens eine Leistungshalbleiter eine Diode oder ein Thyristor. Dioden und Thyristoren sind bezüglich hoher Ströme besonders robuste Halbleiter.

Als besonders vorteilhaft wird eine Anwendung der Vorrichtung bei einer Anordnung zur Erzeugung von Wasserstoff angesehen. Eine entsprechende Anordnung umfasst eine Elektrolyseanlage, die eingangsseitig mittels einer Versorgungsvorrichtung zur elektrischen Versorgung der Elektrolyseanlage verbunden ist, wobei die Versorgungsvorrichtung eine erfindungsgemäße Vorrichtung ist.

Die Erfindung betrifft ferner ein Verfahren zum Versorgen einer Gleichstromlast mittels einer Vorrichtung mit einer Transformatoranordnung und einem Umrichter.

Die Aufgabe der Erfindung ist es, ein solches Verfahren anzugeben, dass eine möglichst effektive und zuverlässige elektrische Versorgung der Gleichstromlast erlaubt.

Die Aufgabe wird bei einem artgemäßen Verfahren erfindungsgemäß dadurch gelöst, dass die Transformatoranordnung netzseitig mittels des Umrichters mit einem Versorgungsnetz und lastseitig mit der zu versorgenden Gleichstromlast verbunden und mittels einer Regelung des Umrichters lastseitig ein Gleichstrom (der auch als Versorgungsstrom bezeichnet werden kann) erzeugt wird.

Die Vorteile des erfindungsgemäßen Verfahrens ergeben sich insbesondere aus den im Zusammenhang mit der erfindungsgemäßen Vorrichtung beschriebenen Vorteilen.

Bevorzugt umfasst die Transformatoranordnung einen ersten, einen zweiten und einen dritten Transformator, die jeweils netzseitig mit dem Umrichter verbunden und lastseitig mit der Gleichstromlast verbindbar sind, wobei mittels des Umrichters lastseitig des ersten Transformators ein erster trapezförmiger Ausgangsstromverlauf (der zeitliche Verlauf eines ersten lastseitigen Ausgangsstromes am ersten Transformator), lastseitig des zweiten Transformators ein zweiter trapezförmiger Ausgangsstromverlauf (der zeitliche Verlauf eines zweiten lastseitigen Ausgangsstromes am zweiten Transformator) und lastseitig des dritten Transformators ein dritter trapezförmiger Ausgangsstromverlauf (der zeitliche Verlauf eines dritten lastseitigen Ausgangsstromes am dritten Transformator) erzeugt werden, wobei die drei Ausgansströme unter Erzeugung des lastseitigen Gleichstromes gegeneinander phasenverschoben sind. Als trapezförmiger Ausgangsstromverlauf wird ein Stromverlauf verstanden, der eine steigende Flanke aufweist, an die sich ein im Wesentlichen konstanter Verlauf sowie anschließend eine fallende Flanke anschließen. Geeigneterweise ist der Ausgangsstromverlauf nichtnegativ (bzw. nichtpositiv, je nach Konvention). Zur Erzeugung des ausgangsseitigen Gleichstromes werden die drei Phasen so miteinander verschaltet und phasenverschoben angesteuert, dass die ausgangseitigen (sekundärseitigen) Stromtrapeze sich zu einem im Wesentlichen (im Rahmen der technischen Umsetzbarkeit) konstanten Gleichstrom überlagern. Es ist hierbei anzumerken, dass dieses Verfahren nicht auf dreiphasige Netze eingeschränkt ist und entsprechend auch bei einer anderen Anzahl von Phasen (>1) prinzipiell anwendbar ist.

Die Erfindung soll nachfolgend anhand von in den Figuren 2 bis 5 dargestellten Beispielen weiter erläutert.
Figur 2 zeigt ein erstes Ausführungsbeispiel der erfindungsgemäßen Vorrichtung in einer schematischen Darstellung;
Figur 3 zeigt ein zweites Ausführungsbeispiel der erfindungsgemäßen Vorrichtung in einer schematischen Darstellung;
Figur 4 zeigt einen Umrichterarm für eine der Vorrichtungen der Figuren 2 bzw. 3 in einer schematischen Darstellung;
Figur 5 zeigt einen Verlauf von Strom und Spannung bei einem erfindungsgemäßen Verfahren.

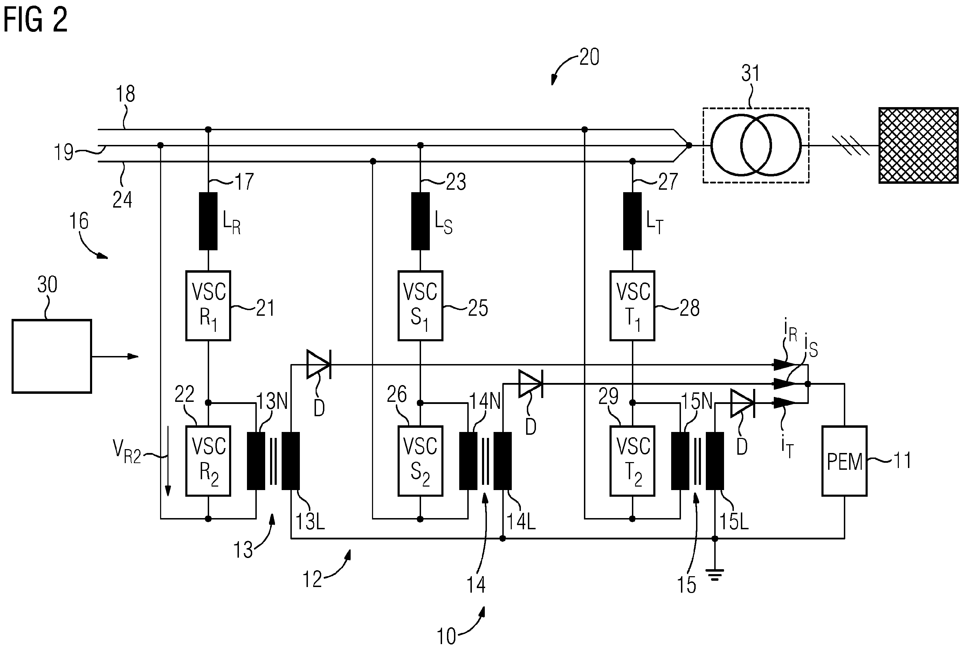

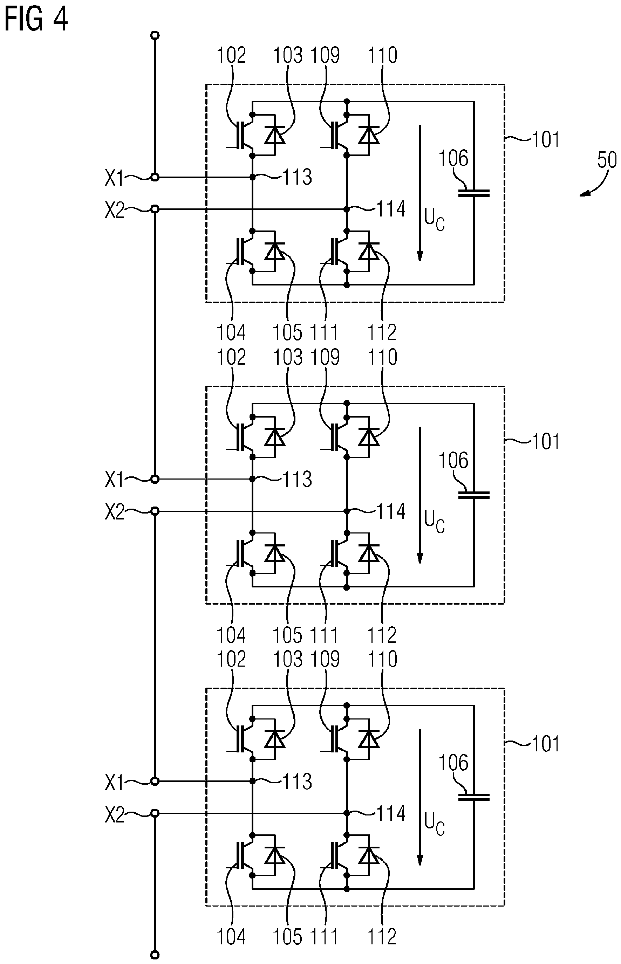

In Figur 2 ist eine Vorrichtung 10 zum Versorgen einer Gleichstromlast darstellt. Die Gleichstromlast ist in dem in Figur 2 dargestellten Beispiel eine Elektrolyseanlage 11. Die Vorrichtung 10 umfasst eine Transformatoranordnung 12 mit einem ersten Transformator 13, einem zweiten Transformator 14 und einem dritten Transformator 15. Die Vorrichtung 10 umfasst ferner einen Umrichter 16. Der Umrichter 16 umfasst einen ersten Umrichterzweig 17, der sich zwischen einer ersten und einer zweiten Phase 18 bzw. 19 eines Versorgungsnetzes 20 erstreckt. Der erste Umrichterzweig umfasst eine erste Drossel LR, einen ersten netzseitigen Umrichterarm 21 sowie einen zweiten transformatorseitigen Umrichterarm 22. Auf den Aufbau der Umrichterarme wird in der nachfolgenden Figur 4 näher eingegangen. Der Umrichter 16 umfasst ferner einen zweiten Umrichterzweig 23, der sich zwischen der zweiten und einer dritten Phase 19 bzw. 24 des Versorgungsnetzes 20 erstreckt. Der zweite Umrichterzweig 23 umfasst eine zweite Drossel LS, einen zweiten netzseitigen Umrichterarm 25 sowie einen zweiten transformatorseitigen Umrichterarm 26. Der Umrichter 16 umfasst zudem einen dritten Umrichterzweig 27, der sich zwischen der ersten und der dritten Phase 18 bzw. 24 des Versorgungsnetzes 20 erstreckt. Der dritte Umrichterzweig 27 umfasst eine dritte Drossel LT, einen dritten netzseitigen Umrichterarm 28 sowie einen dritten transformatorseitigen Umrichterarm 29. Es ist erkennbar, dass die Transformatoranordnung 12 netzseitig mittels des Umrichters 16 mit einem Versorgungsnetz 20 und lastseitig mit der zu versorgenden Gleichstromlast 11 verbindbar ist. Der Umrichter 16 umfasst ferner eine Regelungseinrichtung 30, die zum Steuern bzw. Regeln der Umrichterarme 21, 22, 25, 26, 28 und 29 eingerichtet ist. Mittels der Regelungseinrichtung 30 kann an dem jeweiligen transformatorseitigen Umrichterarm eine transformatorseitige Spannung erzeugt werden, die für den ersten transformatorseitigen Umrichterarm 22 mit VR2 bezeichnet wird. Es ist zudem erkennbar, dass die Vorrichtung 10 optional mittels eines weiteren Transformators 31 an ein Versorgungsnetz angeschlossen werden kann.

Der erste Transformator 13 weist eine erste netzseitige Wicklung 13N, die in einer Parallelschaltung zum ersten transformatorseitigen Umrichterarm 22 angeordnet ist, und eine erste lastseitige Wicklung 13L auf, die in einer Parallelschaltung zu der Gleichstromlast 11 angeordnet ist. Der zweite Transformator 14 weist eine zweite netzseitige Wicklung 14N, die in einer Parallelschaltung zum zweiten transformatorseitigen Umrichterarm 26 angeordnet ist, und eine zweite lastseitige Wicklung 14L auf, die in einer Parallelschaltung zu der Gleichstromlast 11 angeordnet ist. Der dritte Transformator 15 weist eine dritte netzseitige Wicklung 15N, die in einer Parallelschaltung zum dritten transformatorseitigen Umrichterarm 29 angeordnet ist, und eine dritte lastseitige Wicklung 15L auf, die in einer Parallelschaltung zu der Gleichstromlast 11 angeordnet ist. Sekundär- bzw. lastseitig sind die lastseitigen Wicklungen 13L, 14L, 15L parallel zueinander angeordnet. Zudem sind parallel zu den jeweiligen lastseitigen Wicklungen 13L, 14L, 15L unidirektionale Leistungshalbleiter D vorgesehen. Die Ausgangs- bzw. lastseitigen Ströme werden jeweils mit iR, iS bzw. iT bezeichnet.

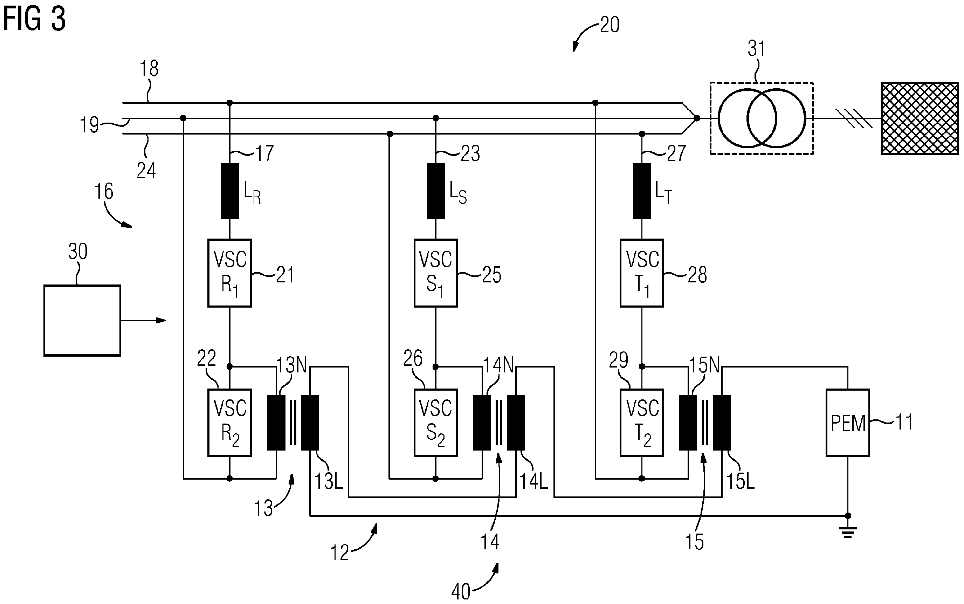

In Figur 3 ist eine Vorrichtung 40 zum Versorgen einer Gleichstromlast 11 dargestellt. In den Figuren 2 und 3 wurden gleiche und gleichartige Elemente und Bauteile mit gleichen Bezugszeichen versehen. Im Unterschied zur Vorrichtung 10 der Figur 2 sind die lastseitigen Wicklungen 13L, 14L und 15L in einer Reihenschaltung miteinander verbunden, wobei diese Reihenschaltung parallel zu der Gleichstromlast 11 angeordnet ist. Zudem wurde auf die unidirektionalen Leistungshalbleiter (die Dioden D in Figur 2) verzichtet.

In Figur 4 ist der mögliche Aufbau eines Umrichterarmes 50 dargestellt, der als einer der Umrichterarme 21, 22, 25, 26, 28, 29 der Figuren 2 und 3 einsetzbar ist. Der Umrichterarm 50 weist eine Reihenschaltung von Schaltmodulen 101 (sogenannten Vollbrückenschaltmodulen). In dem hier dargestellten Beispiel umfasst der Umrichterarm 50 drei Schaltmodule, im Allgemeinen ist deren Anzahl jedoch beliebig und an die jeweilige Anwendung anpassbar.

Das Schaltmodul 101 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst das Schaltmodul 101 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallelgeschaltet ist. Ein Zwischenkreiskondensator 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet. Durch eine geeignete Steuerung der Leistungshalbleiter 102, 104, 109 und 111 kann die an den Anschlüssen X1, X2 abfallende Spannung erzeugt werden, die der am Zwischenkreiskondensator 106 abfallenden Spannung Uc, der am Zwischenkreiskondensator 106 abfallenden Spannung jedoch mit entgegengesetzter Polarität (-Uc) oder der Spannung null entspricht.

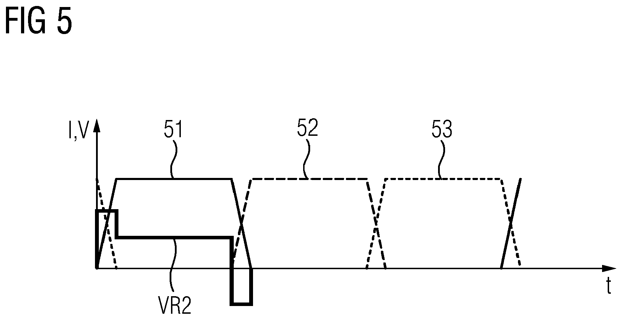

In Figur 5 sind in einem Diagramm die Strom- und Spannungsverläufe dargestellt, die mittels des Umrichters der Vorrichtung 10 oder 50 zur Versorgung der Gleichstromlast 11 erzeugt werden. Zur Wahrung der Übersichtlichkeit ist in Figur 5 lediglich die Spannung VR2 dargestellt, die mittels des ersten transformatorseitigen Umrichterarmes 22 gestellt wird (vgl. Figuren 2 bzw. 3). Der sich daraus ergebende Ausgangsstromverlauf 51 eines ersten ausgangsseitigen Stromes iR (vgl. Figur 2) ist erkennbar trapezförmig. Die entsprechend erzeugten Ausgangsstromverläufe 52 und 53 der lastseitigen Ströme iS und iT (vgl. Figur 2) sind ebenfalls trapezförmig, jedoch jeweils zueinander derart phasenverschoben, dass sich ein lastseitiger Gesamtgleichstrom iGES = iR + iS + iT ergibt.

## Patentansprüche

1. Vorrichtung (10) zum Versorgen einer Gleichstromlast (11) mit einer Transformatoranordnung (12) und einem Umrichter (16),
**dadurch gekennzeichnet, dass** die Transformatoranordnung (12) netzseitig mittels des Umrichters (16) mit einem Versorgungsnetz (20) und lastseitig mit der zu versorgenden Gleichstromlast (11) verbindbar ist, und der Umrichter (16) zum Erzeugen eines lastseitigen Gleichstromes eingerichtet ist.

2. Vorrichtung (10) nach Anspruch 1, wobei der Umrichter (16) einen ersten Umrichterzweig (17) und einen zweiten Umrichterzweig (23) umfasst und die Transformatoranordnung (12) einen ersten und einen zweiten Transformator (13, 14) umfasst, wobei der erste Transformator (13) mittels des ersten Umrichterzweiges (17) und der zweite Transformator (14) mittels des zweiten Umrichterzweiges (23) mit dem Versorgungsnetz (20) verbindbar sind, und wobei lastseitige Wicklungen (13L, 14L) des ersten und des zweiten Transformators (13, 14) in Reihe oder parallel zueinander geschaltet sind.

3. Vorrichtung (10) nach Anspruch 2, wobei der erste Umrichterzweig (17) zwischen einer ersten und einer zweiten Phase (18, 19) des Versorgungsnetzes (20) schaltbar ist und einen ersten netzseitigen Umrichterarm (21) und einen ersten transformatorseitigen Umrichterarm (22) umfasst, wobei der erste Transformator (13) zum ersten transformatorseitigen Umrichterarm (22) parallelgeschaltet ist, und
der zweite Umrichterzweig (23) zwischen einer zweiten und einer dritten Phase (19, 24) des Versorgungsnetzes (20) schaltbar ist und einen zweiten netzseitigen Umrichterarm (25) und einen zweiten transformatorseitigen Umrichterarm (26) umfasst, wobei der zweite Transformator (14) zum zweiten transformatorseitigen Umrichterarm (26) parallelgeschaltet ist.

4. Vorrichtung (10) nach Anspruch 3, wobei die ersten und zweiten netzseitigen und transformatorseitigen Umrichterarme (21, 22, 25, 26) jeweils eine Reihenschaltung von Schaltmodulen (101) umfassen, wobei jedes Schaltmodul (101) Leistungshalbleiterschalter und einen schaltmoduleigenen Energiespeicher umfasst.

5. Vorrichtung (10) nach Anspruch 3 oder 4, wobei mittels einer Regelungseinrichtung (30) an dem ersten transformatorseitigen Umrichterarm (22) eine erste Umrichterspannung und an dem ersten netzseitigen Umrichterarm eine zweite Umrichterspannung erzeugbar sind, wobei eine Summe der ersten und der zweiten Umrichterspannung einer Netzspannung des Versorgungsnetzes (20) entspricht.

6. Vorrichtung (10) nach einem der vorangehenden Ansprüche, wobei zur Vermeidung von Kreisströmen in der Vorrichtung lastseitig der Transformatoranordnung (12) ein Leistungshalbleiter (D) mit einer Sperr- und einer Durchlassrichtung vorgesehen ist.

7. Vorrichtung (10) nach Anspruch 6, wobei der Leistungshalbleiter (D) eine Diode oder ein Thyristor ist.

8. Anordnung (10, 11) zur Erzeugung von Wasserstoff, umfassend eine Elektrolyseanlage, die eingangsseitig mittels einer Versorgungsvorrichtung zur elektrischen Versorgung der Elektrolyseanlage verbunden ist,
**dadurch gekennzeichnet, dass**
Versorgungsvorrichtung eine Vorrichtung (10) nach einem der Ansprüche 1 bis 7 ist.

9. Verfahren zum Versorgen einer Gleichstromlast (11) mittels einer Vorrichtung (10) mit einer Transformatoranordnung und (12) einem Umrichter (16), wobei die Transformatoranordnung (12) netzseitig mittels des Umrichters (16) mit einem Versorgungsnetz und lastseitig mit der zu versorgenden Gleichstromlast (11) verbunden wird, bei dem mittels einer Regelung des Umrichters (16) lastseitig ein Gleichstrom erzeugt wird.

10. Verfahren nach Anspruch 9, wobei die Transformatoranordnung (12) einen ersten, einen zweiten und einen dritten Transformator (12, 13, 14) umfasst, die jeweils netzseitig mit dem Umrichter (16) und lastseitig mit der Gleichstromlast (11) verbunden werden, wobei mittels des Umrichters (16) lastseitig des ersten Transformators (13) ein erster trapezförmiger Ausgangsstromverlauf, lastseitig des zweiten Transformators (14) ein zweiter trapezförmiger Ausgangsstromverlauf und lastseitig des dritten Transformators (15) ein dritter trapezförmiger Ausgangsstromverlauf erzeugt werden, wobei die drei Ausgansströme unter Erzeugung des lastseitigen Gleichstromes gegeneinander phasenverschoben sind.
